# EUROPEAN PATENT SPECIFICATION

(11) **EP 1 772 796 B1**
(45) Date of publication and mention of the grant of the patent: **21.12.2011**
(21) Application number: 05109223.7
(22) Date of filing: 05.10.2005
(51) Int. Cl.: G06F 1/16, G06F 1/18, H01Q 1/24, H04B 1/38, H04M 1/23

(54) **Handheld electronic communication device with metallic keypad**
Tragbares electronisches Kommunikationsgerät mit metallischem Tastenfeld
Appareil de communication électronique portable avec touche métallique

(43) Date of publication of application: 11.04.2007
(73) Proprietor: Imerj, Limited, Grand Cayman (KY)
(72) Inventor: Robert, Lydia, 92160 Antony (FR); Dalla-Ricca, Eric, 92700 Colombes (FR); Guirauton, Alain, 95100 Argenteuil (FR)
(74) Representative: Tolfts, Pippa Helen

(56) References cited:
- GB-A- 2 102 626
- US-A- 5 877 709
- ALBERT MALIK: "Razor thin with the Motorola V3" WWW.IMOBILE.COM.AU, [Online] 7 February 2005 (2005-02-07), pages 1-3, XP002367548 Retrieved from the Internet: URL:http://www.imobile.com.au/PhoneReviews /default.asp?ID=reviewsfeb0511&print=yes> [retrieved on 2006-02-13]

## Description

The present invention concerns a handheld electronic communication device comprising, in a housing, a printed circuit board for holding electrical components and providing several connection points, and a keypad extending parallel to said printed circuit board and including a keypad user's interface.

Such structural features can be found today in a great number of portable devices, such as PDA (Personal Digital Assistant), phones like GSM phones or DECT phones, or even Personal Computers.

Manufacturers for this kind of devices always look for solutions which enable either to reduce to the maximum the size and weight of the device, or, for a given size, to increase the functionalities of the device.

A first important issue relating to such devices concerns the protection of the printed circuit board and of components supported by said printed circuit board against Electrostatic Discharge phenomena. In known devices, a specific metallic sheet is generally added inside the housing under the keypad, extending parallel between the printed circuit board and the keypad. This leads to extra costs and also to extra thickness.

Another important issue relates to devices for which an antenna is needed for radio communication purposes. In such cases, the radiating element which constitutes a part of the antenna is also a specific metallic feature, generally provided with an internal patch antenna, for which the dedicated space is important (up to 5 cm³ in the case of a triband mobile phone).

The external appearance of such devices becomes also an important criterion for consumers purchasing said device.

Document XP 002367548 entilted "Razor thin with the Motorola V3", published on 2005/02/07, discloses a mobile phone in which the keypad is made of one complete sheet of metal.

The aim of the invention is to provide a solution which meets both the bulk constraints and the aesthetic requirements.

To this aim, an object of the present invention is to provide a handheld electronic communication device according to claim 1.

Said slot may be designed to separate metallic sheet into two electrically isolated parts, a first part provided with said connection area electrically connected to said antenna's feeding point of said printed circuit board, and a second part provided with a second connection area electrically connected to a ground connection of said printed circuit board for constituting a shield against electrostatic discharge phenomena.

Other features and advantages of the invention will become apparent from the following description with reference to the accompanying drawings, in which:
- Figure 1 shows schematically a sectional longitudinal view of a device according to the invention;
- Figure 2 shows schematically front and side views of metallic sheet in a first embodiment in which the keypad is also used as a shield against electrostatic di scharges;
- Figure 3 shows schematically front and side views of metallic sheet in a second embodiment in which the keypad is used as an antenna radiating element;
- Figure 4 shows schematically front and side views of metallic sheet in a third embodiment in which the keypad is used both as a shield against electrostatic discharges and as an antenna radiating element.

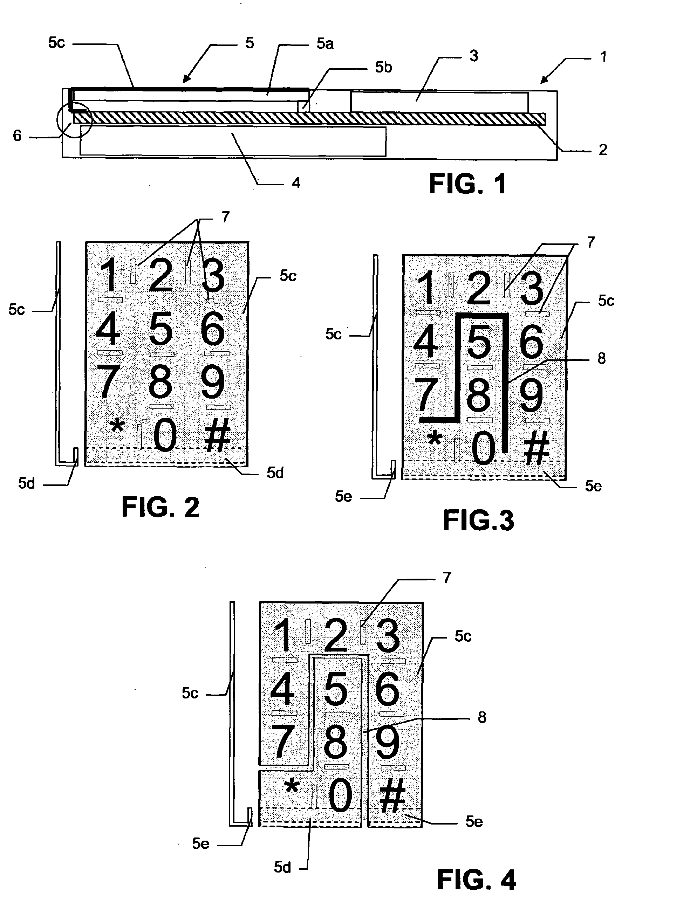

As shown on figure 1, the electronic communication device according to the present invention comprises a housing 1 which is generally of parallelepiped shape and made of plastic material. Housing 1 classically comprises a printed circuit board 2 for carrying different electronics components of the device, such as but not limited to a display 3 for instance a LCD. The housing also comprises a battery 4 for supplying voltage to different components, via printed circuit board 2. To this aim, printed circuit board 2 is electrically connected to said battery 4, and comprises, as known, several specific points or printed electrical tracks including energy connection and ground connection (not shown). At last, the device comprises a keypad 5 which extends parallel to printed circuit board 2. In figure 1, keyboard 5 extends only over a part of printed circuit board 2, and display 3 extends parallel over the remaining part of printed circuit board. More precisely, keypad 5 comprises a keypad module 5a, which can be held by housing 1, and which comprises contacts or domes (not shown) which can be switched off or on, depending whether a user has pressed or not a corresponding key. Keypad 5 also comprises a connection module 5b for connecting keypad module 5a to printed circuit board 2 Consequently, each time a key is pressed by a user, a microprocessor (not shown) on printed circuit board 2 can receive this information and trigger a corresponding action on the device.

According to an essential feature of the invention, keypad 5 also comprises an external metallic sheet 5c which covers keypad module 5a so as to constitute an external user's interface, and which is electrically connected to printed circuit board 2. The electrical connection is schematically shown by area 6 on figure 1. Depending on the choice of the electrical point(s) or track(s) on PCB 2 to which said metallic sheet 5c will be connected, this feature will thus enable to give to the keypad an additional functionality, as explained in details hereinafter.

In the specific embodiment of figure 2, metallic sheet 5c comprises keypad areas with figures or drawings corresponding to keys which can be pressed by a user. Sheet 5c can comprise slots or cuts 7, the purpose of which is to identify areas for the keys. Alternatively, sheet 5c could be locally stamped at several places for creating embossed shapes representing each key. The thickness of metallic sheet 5c as well as the metallic material used must be chosen such as said sheet can be locally bent so that when a user presses one given key, the corresponding switch or contact on keypad module 5a can be actuated. Additionally, said sheet 5c comprises a connection area 5d for electrical connection of metallic sheet 5c to ground connection (not shown) of the PCB. Said keypad, thanks to metallic sheet 5c connected to ground point, constitutes thus a shield against electrostatic discharge phenomena. PCB 2 and components, or at least part of PCB and corresponding components which are covered by metallic sheet 5c of keypad 5, are thus protected without the use of a separate specific metallic shield, as proposed in known solutions. Consequently, extra cost and extra thickness which would be necessary with prior art solutions are here avoided.

In the specific embodiment of figure 3, metallic sheet 5c is to be used as a radiating part of an antenna. In this case, portable device comprises, on PCB board 2, a radio communication module (not shown) for wireless transmission and/or reception of signals. Aswell known in the art, output and/or input of this radio communication module constitutes what is known as an antenna's feeding point on the PCB to which a radiating element must be connected. According to the invention, metallic sheet 5c comprises a connection area 5e, which is used, in the embodiment of figure 3, for electrical connection of metallic sheet 5c to the antenna's feeding point (not shown) on the PCB. In addition, as illustrated on figure 3, metallic sheet 5 c further comprises a coplanar slot 7 in the thickness of sheet 5c. Consequently, said keypad also constitutes an antenna whose working frequencies depend on the shape and size of said slot. The width of slot 8 will preferably be as small as possible in order to be barely visible to the naked eye.

Consequently, thanks to the use of a metallic keypad sheet 5c with slot 8, and with adequate electrical connection to PCB, there is no need to provide the device with a separate antenna which, in known solutions, generally requires an important dedicated space.

Embodiment shown on figure 4 is a combination of first and second embodiments. In this case, slot 8 is designed in order to separate metallic sheet 5c in two parts which are electrically isolated one from each other. Each part includes a connection area, one, with reference 5d, which is used for electrical connection to ground point on PCB, the other, with reference 5e being used for electrical connection to antenna's feeding point on the PCB. Accordingly, the same keypad user's i nt erf ace in the form of a metallic sheet 5c can be used as a protection against Electrostatic Discharges phenomena, and as an antenna.

In all embodiments disclosed above, metallic keypad provides also the functionality of another element (ESD shield and/ or antenna), thus leading to an optimized bulk.

In addition, the use of a metallic keypad enables, in term of external design, to have a very trendy appearance.

In all embodiments disclosed here above, connection areas 5d and 5e have been represented as U-shaped bent portion of metallic sheet 5c. Other connections can be used in the same spirit in order to connect metallic sheet 5c to ground point and/ or antenna's feeding point on PCB.

## Claims

1. Handheld electronic communication device comprising, in a housing (1), a printed circuit board (2) for holding electrical components and providing several connection points, and a keypad (5) extending parallel to said printed circuit board (2) and including a keypad user's interface (5c) made of a metallic sheet, said device further comprising a radio communication module for transmitting and/or receiving signals, said radio communication module being connected to a radiating element via an antenna's feeding, point on printed circuit board (2), **characterized in that** said métallic sheet is provided with a connection area (5e) electrically connected to said antenna's feeding point of said printed circuit board (2), and **in that** said metallic sheet further comprises a slot (8), said keypad user's interface (5c) constituting then said radiating element whose working frequencies depend on the shape and the size of said slot.

2. Handheld electronic communication device according to claim 1, **characterized in that** said slot (8) is designed to separate metallic sheet (5c) into two electrically isolated parts, a first part provided with said connection area (5e) electrically connected to said antenna's feeding point of said printed circuit board (2), and a second part provided with a second connection area (5d) electrically connected to a ground connection of said printed circuit board (2) for constituting a shield against electrostatic discharge phenomena.

## Patentansprüche

1. Tragbares elektronisches Kommunikationsgerät, das in einem Gehäuse (1) eine Leiterplatte (2) zum Aufnehmen von elektrischen Komponenten und Bereitstellen von mehreren Anschlusspunkten und ein Tastenfeld (5) umfasst, das sich parallel zu der Leiterplatte (2) erstreckt und eine Tastenfeld-Benutzeroberfläche (5c) aufweist, die aus einer Metallfolie hergestellt ist, wobei das Gerät weiterhin ein Funkkommunikationsmodul zum Senden und/oder Empfangen von Signalen umfasst, wobei das Funkkommunikationsmodul mittels eines Antennen-Einspeisepunkts auf der Leiterplatte (2) mit einem Abstrahlelement verbunden ist, **dadurch gekennzeichnet, dass** die Metallfolie mit einem Verbindungsbereich (5e) versehen ist, der mit dem Antennen-Einspeisepunkt der Leiterplatte (2) elektrisch verbunden ist, und dass die Metallfolie weiterhin einen Schlitz (8) umfasst, wobei die Tastenfeld-Benutzeroberfläche (5c) dann das Abstrahlelement bildet, dessen Arbeitsfrequenzen von der Form und der Größe des Schlitzes abhängen.

2. Tragbares elektronisches Kommunikationsgerät nach Anspruch 1, **dadurch gekennzeichnet, dass** der Schlitz (8) so entworfen ist, dass sie die Metallfolie (5c) in zwei elektrisch isolierte Teile unterteilt, wobei ein erster Teil mit dem Verbindungsbereich (5e) versehen ist, der mit dem Antennen-Speisepunkt der Leiterplatte (2) elektrisch verbunden ist, und ein zweiter Teil mit einem zweiten Verbindungsbereich (5d) versehen ist, der mit einem Masseanschluss der Leiterplatte (2) elektrisch verbunden ist, um eine Abschirmung gegen elektrostatische Entladungsphänomene zu bilden.

## Revendications

1. Dispositif de communication électronique portable comprenant, dans un boîtier (1), une carte de circuits imprimés (2) pour tenir des composants électriques et fournir plusieurs points de connexion, et un clavier (5) s'étendant parallèlement à ladite carte de circuits imprimés (2) et comprenant une interface utilisateur de clavier (5c) faite d'une tôle métallique, ledit dispositif comprenant en outre un module de radiocommunication pour émettre et/ou recevoir des signaux, ledit module de communication radio étant connecté à un élément rayonnant par l'intermédiaire d'un point d'alimentation d'antenne sur la carte de circuits imprimés (2), **caractérisé par le fait que** ladite tôle métallique comporte une zone de connexion (5e) connectée électriquement audit point d'alimentation d'antenne de ladite carte de circuits imprimés (2), et **par le fait que** ladite tôle métallique comprend en outre une fente (8), ladite interface utilisateur de clavier (5c) constituant alors ledit élément rayonnant dont les fréquences de travail dépendent de la forme et de la dimension de ladite fente.

2. Dispositif de communication électronique portable selon la revendication 1, **caractérisé par le fait que** ladite fente (8) est conçue pour séparer la tôle métallique (5c) en deux parties isolées électriquement, une première partie comportant ladite zone de connexion (5e) connectée électriquement audit point d'alimentation d'antenne de ladite carte de circuits imprimés (2), et une seconde partie comportant une seconde zone de connexion (5d) connectée électriquement à une connexion de masse de ladite carte de circuits imprimé (2) pour constituer une protection contre les phénomènes de décharge électrostatique.
